# EUROPEAN PATENT SPECIFICATION

(11) **EP 3 709 790 B1**
(45) Date of publication and mention of the grant of the patent: **08.05.2024**
(21) Application number: 18804528.0
(22) Date of filing: 05.11.2018
(51) Int. Cl.: A01D 45/02

(54) **ATTACHABLE LUG FOR CORN GATHERING BELTS**
BEFESTIGUNGSÖSE FÜR MAISBÜNDELUNGSBÄNDER
PATTE ATTACHABLE POUR COURROIES DE COLLECTE DE MAÏS

(30) Priority: 15.11.2017 US 201715813188
(43) Date of publication of application: 23.09.2020
(73) Proprietor: ContiTech Deutschland GmbH, 30175 Hannover (DE)
(72) Inventor: FEUERBORN, Frank, Lincoln, Nebraska 68526 (US); JANNE, Mike, Lincoln, Nebraska 68504 (US)
(74) Representative: Continental Corporation
(86) International application number: PCT/EP2018/080142
(87) International publication number: WO 2019/096605

(56) References cited:
- EP-A1- 0 259 244
- EP-A2- 0 095 435
- US-A- 3 853 016
- US-A- 4 244 162
- US-A- 4 805 388
- US-A- 5 927 054

## Description

### FIELD

The field to which the disclosure generally relates to is agricultural implements for harvesting crops, and more particularly to belt components used in corn harvesting headers.

### BACKGROUND

This section provides background information to facilitate a better understanding of the various aspects of the disclosure. It should be understood that the statements in this section of this document are to be read in this light, and not as admissions of prior art.

Some conventional harvesters for harvesting crops (see for example EP 0 259 244 A1) such as sweet corn, seed corn or field (animal feed, etc.) corn, use corn heads which utilize unit gear system which drives both the knives (or stock rolls) and gathering belts. There are various configurations of machines to be used in harvesting corn in which the stalk of the crop is drawn into the forward end of the gathering portion of the harvester by means of gathering belts including lugs incorporated therein. The stalk of the corn enters a narrow slot which is elongated in the fore and aft direction of the machine, i.e. parallel to the direction in which the machine moves. The slot is of sufficient width to accept the stalk but not permit the ears of corn to fall through. A mechanism mounted below the planar faces forming the slot draws the stalk downwardly through the slot thereby separating the ears from the stalk. After separation, the ears are conveyed by means of a pair of gathering belts to the rear of the gathering head for further processing, e.g. removal of the husk and separation of the corn kernels from the ear in known manner, or the like.

The stalk engaging lugs of the gathering belts are generally a flexible material incorporated in the molded belt to define a plurality of generally sinuous loops. Such flexible lugs may create problems during use, including inefficient feedings, molded on lugs create stresses in the belt causing early cracks and failures, as well as high repair costs when the entire gathering belt needs to be replaced, due to lug damage or failure.

Thus, there is a need for improved gathering belt designs which address the above described problems, such need met at least in part with embodiments according to this disclosure.

### SUMMARY

This section provides a general summary of the disclosure, and is not a necessarily a comprehensive disclosure of its full scope or all of its features.

In a first aspect of the disclosure, a crop gathering belt according to claim 1 is presented.

### BRIEF DESCRIPTION OF THE DRAWINGS

Certain embodiments of the disclosure will hereafter be described with reference to the accompanying drawings, wherein like reference numerals denote like elements. It should be understood, however, that the accompanying figures illustrate the various implementations described herein and are not meant to limit the scope of the claims.
FIG. 1 is a side perspective view of a crop harvester;
FIG. 2 is a top view of a portion of a corn head used in conjunction with a harvester, such as that shown in FIG. 1;
FIG. 3 depicts an embodiment of a gathering belt assembly in accordance with the disclosure; and,
FIG. 4a through FIG. 4d illustrated retention components/systems for securing an attachable lug to a gathering belt carcass.

### DETAILED DESCRIPTION

The following description of the variations is merely illustrative in nature and is in no way intended to limit the scope of the disclosure, its application, or uses. The description is presented herein solely for the purpose of illustrating the various embodiments of the disclosure and should not be construed as a limitation to the scope and applicability of the disclosure. In the summary of the disclosure and this detailed description, each numerical value should be read once as modified by the term "about" (unless already expressly so modified), and then read again as not so modified unless otherwise indicated in context. Also, in the summary of the disclosure and this detailed description, it should be understood that a value range listed or described as being useful, suitable, or the like, is intended that any and every value within the range, including the end points, is to be considered as having been stated. For example, "a range of from 1 to 10" is to be read as indicating each and every possible number along the continuum between about 1 and about 10. Thus, even if specific data points within the range, or even no data points within the range, are explicitly identified or refer to only a few specific, it is to be understood that inventors appreciate and understand that any and all data points within the range are to be considered to have been specified, and that inventors had possession of the entire range and all points within the range.

Unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of concepts according to the disclosure. This description should be read to include one or at least one and the singular also includes the plural unless otherwise stated.

The terminology and phraseology used herein is for descriptive purposes and should not be construed as limiting in scope.

Also, as used herein any references to "one embodiment" or "an embodiment" means that a particular element, feature, structure, or characteristic described in connection with the embodiment is included in at least one embodiment. The appearances of the phrase "in one embodiment" in various places in the specification are not necessarily referring to the same embodiment.

Typical crop gathering belts have from 5 to 14 lugs, in some cases, approximately 50mm high on the back side of the belt that are cured as one integral part of the belt. Embodiments according to the disclosure use a mechanical means to attach lugs to a molded gathering belt carcass to form the gathering belt assembly, in contrast to conventional crop gathering belts where the lugs to a gathering belt carcass typically molded as a single continuous belt unit, in a so called 'molded on lug' design. In contrast, in accordance with this disclosure, coupling the lugs to an already molded gathering belt carcass could be accomplished by any suitable technique, such as, but not limited to, fasteners, interlocking tabs, interlocking tongue and groove, and the like, or any combination thereof.

Having lugs which are attachable, in some aspects, allows for base of the lug to be connected to the belt in one area, which in turn, allows the lug to move around a small diameter pulley with less flexing. Also, in the event of lug wear or damage just the damaged lug could be replaced instead of the entire belt, thus saving cost and down time.

In yet another aspect, embodiments of the disclosure also give rise for the use of interchangeable lugs to be used for different corn types, or other crop types. For example, a more flexible and less aggressive attachable lug could be used for sweet corn, while a more rigid attachable lug could be used for field corn, with the same gathering belt carcass.

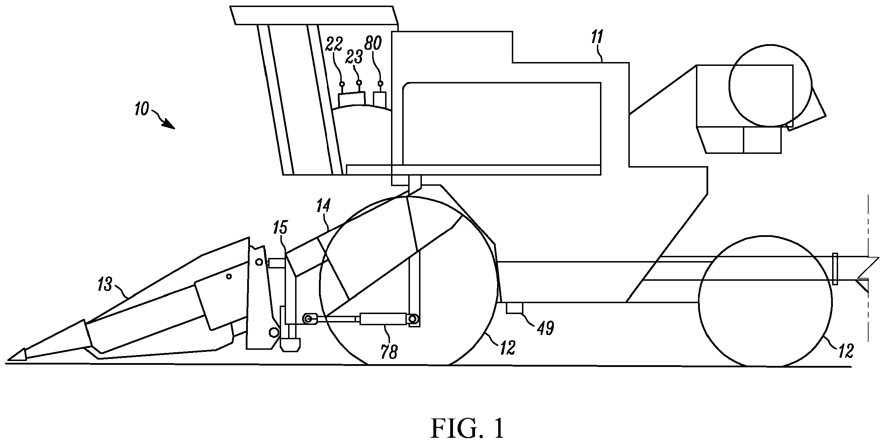

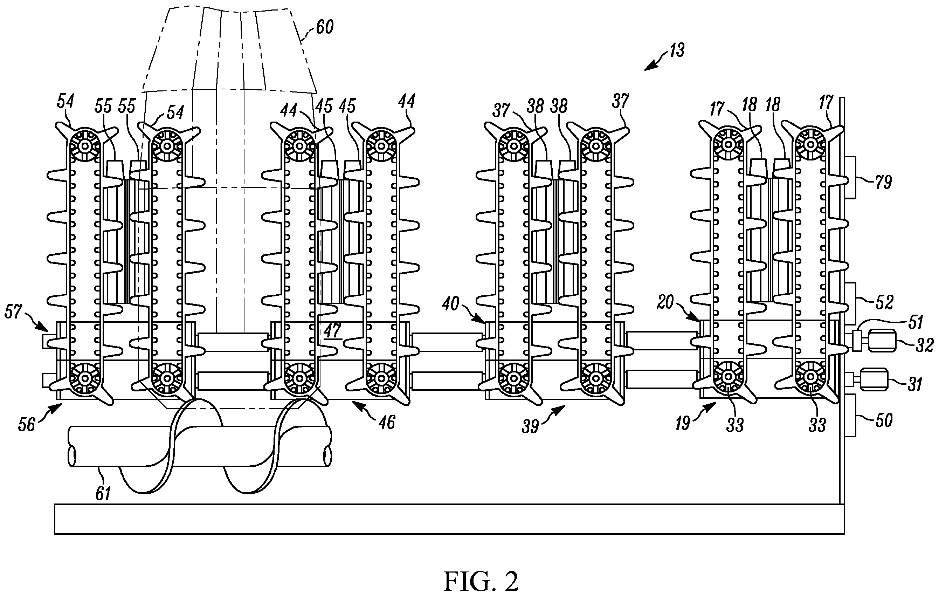

Gathering belt embodiments are useful in conjunction with corn, or other crop, harvesters. FIG. 1 is a schematic view of one type of harvester 10, which includes a chassis 11 supported on wheels 12, where the chassis 11 supports a corn head 13 for harvesting corn through a feeder house 14 with a corn head angle adjuster 15 connected between the corn head 13 and the feeder house 14. FIG. 2 is a cut away plan view of the corn head 13.

With reference to FIG. 2, the corn head 13, which is used to harvest multiple rows at a time, includes a first pair of gathering belts 17, a first pair of knife rolls 18, a first gathering belt drive system 19 mechanically connected to the first pair of gathering belts 17, a first knife roll drive system 20 mechanically connected to the first pair of knife rolls 18, a gathering belt speed switch 22 (FIG. 1) connected to a gathering belt speed controller 50, and a knife roll speed switch 23 (FIG. 1) connected to a knife roll speed controller 52.

A first pair of sprockets 33 are mounted on the first gathering belt output shafts 26. The first pair of gathering belts 17 are mounted on and driven by the first pair of sprockets 33. The first pair of knife rolls 18 are directly connected to the first knife roll output shafts 29.

In the embodiment depicted, the corn head 13, further includes a second pair of gathering belts 37, a second pair of knife rolls 38, a second gathering belt drive system 39 mechanically connected to the second pair of gathering belts 37 and the first gathering belt system 19, a second knife roll drive system 40 mechanically connected to the second pair of knife rolls 38 and the first knife roll drive system 20. An input shaft of the second gathering belt drive system 39 is mechanically connected to a first gathering belt input shaft 25. Second gathering belt output shafts are mechanically connected to the second pair of gathering belts 37. An input shaft of the second knife roll drive system 40 is mechanically connected to a first knife roll input shaft 28. The output shafts of the second knife roll drive system 40 are mechanically connected to the second pair of knife rolls 38.

A third pair of gathering belts 44, a third pair of knife rolls 45, a third gathering belt drive system 46, a third knife roll drive system 47, are also shown in this embodiment. The input shaft of the third gathering belt drive system 46 is mechanically connected to the second gathering belt drive system 39. The input shaft of the third knife roll drive system 47 is mechanically connected to the second knife roll drive system 40.

A fourth pair of gathering belts 54, a fourth pair of knife rolls 55, a fourth gathering belt drive system 56, a fourth knife roll drive system 57, are also shown in this embodiment. The input shaft of the fourth gathering belt drive system 56 is mechanically connected to the third gathering belt drive system 46. The input shaft of the fourth knife roll drive system 57 is mechanically connected to the third knife roll drive system 47.

A separator covering 60 is shown to cover a right gathering belt of the fourth pair of gathering belts 54 and a left gathering belt of the third pair of gathering belts 44. Other separator coverings are also provided to similarly cover gathering belts of adjacent pairs of gathering belts. An auger 61 is located at the rear of the gathering belts.

A ground speed sensor 49, FIG. 1, is mounted to the chassis and detects the ground speed of the harvester 10. Both the ground speed sensor 49 and the gathering belt speed switch 23 are connected either electrically or hydraulically to a gathering belt speed controller 50, FIG. 2.

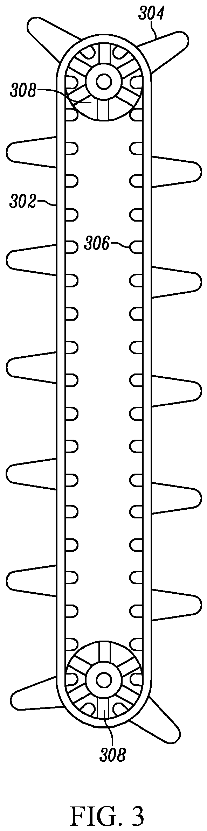

Gathering belts of juxtaposed pairs such as 17, 37, 44 or 54, shown in FIG. 3, are similar in construction, and may be of either equal or unequal lengths. Generally, each gathering belt includes gathering belt carcass having parallel layers of polymeric flexible, resilient material. For example, polymeric materials which include the moldable natural or synthetic rubbers, or castable rubbers or urethanes may be used. Materials used to form the gathering belt carcass and attachable lug may be like materials in some cases, while in some other cases, dissimilar materials. For example, in one aspect, the gathering belt carcass may be based upon a conventional rubber, while the attachable lug may be based upon a resilient polyurethane material.

Any suitable rubbers or other materials may also be used for forming the gathering belt carcasses or attachable lugs, in accordance with the disclosure. Examples include, without limitation, synthetic polyisoprenes, polybutadienes, acrylonitrile butadiene rubber, styrene acrylonitrile butadiene rubber, polychloroprene rubber, styrene-butadiene copolymer rubber, isoprene-isobutylene copolymer rubber and its halogenated derivatives, ethylenepropylene-diene copolymer rubbers such as ethylene-propylene-cyclopentadiene terpolymer, ethylene-propylene ethylidene norbornene terpolymer, and ethylene-propyl ene-I, 4-hexadiene terpolymer, butadiene-propylene copolymer rubber, butadiene-ethylene copolymer rubber, butadiene-isoprene copolymer, polypentenamer, styrene-butadiene-styrene block copolymers, epoxidized natural rubber and their mixtures. In general, such compounds are characterized by repeating olefinic unsaturation in the backbone of the polymer, which generally arises from the presence of butadiene or isoprene monomers in the polymer structure. Urethane materials formed by reacting isocyanate materials with polyester polyols, polyether polyols, polyacrylic polyols, and the like, may be used in compounds forming gathering belt carcasses and/or attachable lugs

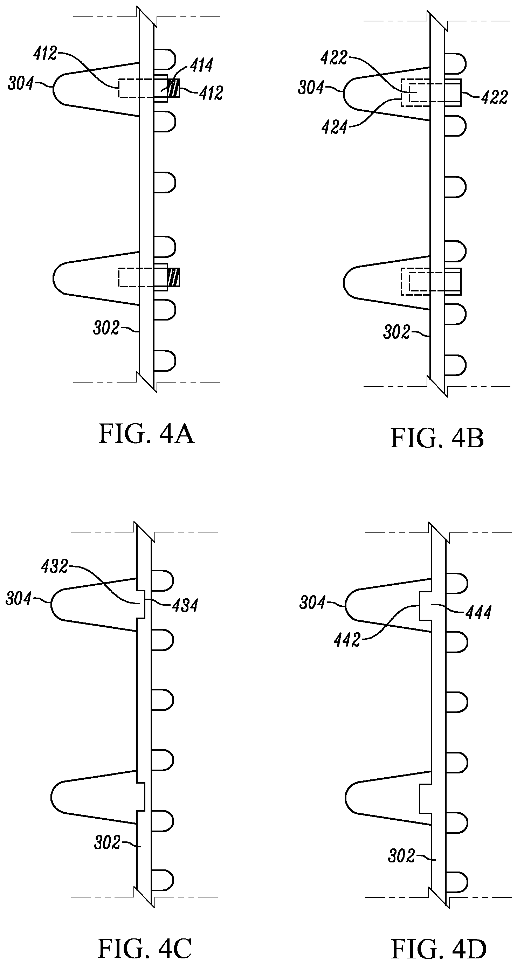

Now referencing FIG. 3, which depicts one embodiment of a gathering belt according to the disclosure. Gathering belt 300 generally includes gathering belt carcass 302 and a plurality of attachable lugs 304 (thirteen shown). Gathering belt carcass 302 is molded as a single continuous unit and includes raised drive lugs 306 (forty two shown) molded into the carcass 302. Drive lugs 306 engage with a pair of sprockets 308, when gathering belt 300 is installed in a harvester. While FIG. 3 shows gathering belt 300 with specific numbers of attachable lugs 304 and raised drive lugs 306, such numbers are not limiting, and any suitable number of attachable lugs 304 and raised drive lugs is within the scope of the disclosure. Attachable lugs 304 are attached to gathering belt carcass 302 thus providing gathering belt 300. Attachable lugs 304 may be mechanically attached but any suitable technique, only some of which are illustrated in FIG. 4a through FIG. 4d, below.

Now referencing FIG. 4a through FIG. 4d, as described above gathering belt assemblies include retention components/systems for securing the attachable lug 304 to the gathering belt carcass 302. FIG. 4a shows one type of attachment technique which includes a plurality of threaded bolts 412 (one shown) extending from and secured within attachable lug 304. Each bolt is passed through gathering belt carcass 302, and a nut 414 is threaded onto the distal end of bolt 412 to thereby secure attachable lug 304 onto the opposing side of gathering belt carcass 302, as shown. Suitable hardware components may also be used for securing, and/or protecting the components, such as washers, lock washers, collars, flanges, female threaded insert within the attachable lugs, and the like.

With reference to FIG. 4b, another type retention componentry for securing the attachable lug 304 to the gathering belt carcass 302, is depicted. FIG. 4b shows a type of attachment technique which includes a plurality of threaded bolts 422 (one shown) passed through gathering belt carcass 302 from a first side, and secured into attachable lug 304 via female threaded inserts 424 contained within the attachable lugs, to thereby secure attachable lug 304 onto the opposing side of gathering belt carcass 302, as depicted. Again, any suitable hardware components may also be used for securing, and/or protecting the components, such as washers, lock washers, collars, flanges, and the like.

While the retention systems shown in FIG. 4a and FIG. 4b are depicted as connecting between drive lugs, in some aspects of the disclosure, the retention systems may be incorporated as a part of the drive lugs. Also, in some other aspects of the disclosure, the threaded bolts may be connected on the drive lug side of the gathering belt carcass with a cross bar to prevent pull out.

FIG. 4c illustrates another type retention system for securing the attachable lug 304 to the gathering belt carcass 302. Attachable lug 304 has a tongue 432 formed thereupon, and extending therefrom, which is matingly received in a groove 434 correspondingly formed in gathering belt carcass 302, as shown. Any suitable hardware components may also be used in conjunction with this system, for further securing, and/or protecting the components, such as the componentry shown in FIG. 4b, washers, lock washers, collars, flanges, end caps, and the like.

FIG. 4d shows yet another type retention system for securing the attachable lug 304 to the gathering belt carcass 302. In contrast with that illustrated in FIG. 4c, attachable lug 304 has a groove 442 formed therein which matingly receives a tongue 444 correspondingly formed upon, and extending from, gathering belt carcass 302, as shown. Again, any suitable hardware components may also be used in conjunction with this system, for further securing, and/or protecting the components, such as the componentry shown in FIG. 4b, screws, washers, lock washers, collars, flanges, end caps, and the like.

While general geometries for the tongue and groove retention systems are shown in FIG. 4c and FIG. 4d, any suitable tongue and groove geometry may be used in accordance with the disclosure. For example, the tongue and groove may be formed at any suitable angle relative the surface of the gathering belt, such as from about 30 degrees to about 90 degrees.

The scope of the invention is defined by the claims.

## Claims

1. A crop gathering belt (17) comprising a gathering belt carcass (302);
**characterised in that**,
the crop gathering belt (17) further comprises a plurality of attachable lugs (304) for connecting to the gathering belt carcass (302) on a first side of the gathering belt carcass (302), and a system for securely attaching lugs comprised in the plurality of attachable lugs (304), to the gathering belt carcass (302), wherein the gathering belt carcass (302) further comprises a plurality of drive lugs (306) disposed on a side opposite the first side of the gathering belt carcass (302).

2. The crop gathering belt (17) according to claim 1 which is a corn gathering belt.

3. The crop gathering belt (17) according to claims 1 or 2, wherein the gathering belt carcass (302) and the plurality of attachable lugs (304) both comprise like rubber materials.

4. The crop gathering belt (17) according to claims 1 or 2, wherein the gathering belt carcass (302) and the plurality of attachable lugs (304) comprise dissimilar rubber materials.

5. The crop gathering belt (17) according to claims 1 or 2, wherein the gathering belt carcass (302) comprises a rubber material and the plurality of attachable lugs (304) comprise a polyurethane materials.

6. The crop gathering belt (17) according to claims 1 or 2, wherein at least one of the lugs is formed from a different material than other lugs comprised in the plurality of attachable lugs (304).

7. The crop gathering belt (17) according to any of claims 1 through 6, wherein the system for securely attaching the lugs comprises a plurality of threaded bolts (412) extending from and secured within each attachable lug (304), wherein each of the plurality of threaded bolts (412) is passed through the gathering belt carcass (302), and wherein nuts (414) are threaded onto a distal end of each of the threaded bolts (412) to secure the attachable lug (304) onto the gathering belt carcass (302).

8. The crop gathering belt (17) according to any of claims 1 through 6, wherein the system for securely attaching the lugs comprises a plurality of female threaded inserts (424) contained within each attachable lug, wherein a plurality of threaded bolts (422) is passed through the gathering belt carcass (302) from a first side, and wherein the plurality of threaded bolts (422) are each screwed into corresponding female threaded inserts (424) comprised in the plurality of female threaded inserts (424), to secure the attachable lug (304) onto gathering belt carcass (302).

9. The crop gathering belt (17) according to any of claims 1 through 6, wherein the system for securely attaching the lugs comprises a tongue (432) extending from each attachable lug comprised in the plurality of attachable lugs (304), wherein the gathering belt carcass (302) comprises a plurality of grooves (434), and wherein each groove comprised in the plurality of grooves (434) receives a tongue (432) extending from each attachable lug to secure the attachable lug (304) onto gathering belt carcass (302).

10. The crop gathering belt (17) according to any of claims 1 through 6, wherein the system for securely attaching the lugs comprises a groove (442) formed within each attachable lug comprised in the plurality of attachable lugs (304), wherein the gathering belt carcass (302) comprises a plurality of tongues (444) extending therefrom, and wherein the groove (442) receives a tongue comprised in the plurality of tongues (444) to secure the attachable lug onto gathering belt carcass (302).

## Patentansprüche

1. Erntegutsammelband (17), das eine Sammelbandkarkasse (302) beinhaltet;
**dadurch gekennzeichnet, dass**
das Erntegutsammelband (17) ferner eine Mehrzahl von befestigbaren Ösen (304) zur Verbindung mit der Sammelbandkarkasse (302) auf einer ersten Seite der Sammelbandkarkasse (302) und ein System zum sicheren Befestigen von in der Mehrzahl von befestigbaren Ösen (304) beinhalteten Ösen an der Sammelbandkarkasse (302) beinhaltet, wobei die Sammelbandkarkasse (302) ferner eine Mehrzahl von Antriebsösen (306) beinhaltet, die auf einer der ersten Seite der Sammelbandkarkasse (302) gegenüberliegenden Seite angeordnet sind.

2. Erntegutsammelband (17) nach Anspruch 1, das ein Maissammelband ist.

3. Erntegutsammelband (17) nach Anspruch 1 oder 2, wobei die Sammelbandkarkasse (302) und die Mehrzahl von befestigbaren Ösen (304) beide ähnliche Kautschukmaterialien beinhalten.

4. Erntegutsammelband (17) nach Anspruch 1 oder 2, wobei die Sammelbandkarkasse (302) und die Mehrzahl von befestigbaren Ösen (304) unterschiedliche Kautschukmaterialien beinhalten.

5. Erntegutsammelband (17) nach Anspruch 1 oder 2, wobei die Sammelbandkarkasse (302) ein Kautschukmaterial beinhaltet und die Mehrzahl von befestigbaren Ösen (304) Polyurethanmaterialien beinhalten.

6. Erntegutsammelband (17) nach Anspruch 1 oder 2, wobei mindestens eine der Ösen aus einem anderen Material als andere in der Mehrzahl von befestigbaren Ösen (304) beinhaltete Ösen ausgebildet ist.

7. Erntegutsammelband (17) nach einem der Ansprüche 1 bis 6, wobei das System zum sicheren Befestigen der Ösen eine Mehrzahl von Gewindebolzen (412) beinhaltet, die sich von jeder befestigbaren Öse (304) erstrecken und darin gesichert sind, wobei jeder der Mehrzahl von Gewindebolzen (412) durch die Sammelbandkarkasse (302) verläuft, und wobei Muttern (414) auf ein distales Ende jedes der Gewindebolzen (412) geschraubt sind, um die befestigbare Öse (304) auf der Sammelbandkarkasse (302) zu sichern.

8. Erntegutsammelband (17) nach einem der Ansprüche 1 bis 6, wobei das System zum sicheren Befestigen der Ösen eine Mehrzahl von Innengewindeeinsätzen (424) beinhaltet, die in jeder befestigbaren Öse enthalten sind, wobei eine Mehrzahl von Gewindebolzen (422) durch die Sammelbandkarkasse (302) von einer ersten Seite verläuft, und wobei die Mehrzahl von Gewindebolzen (422) jeweils in entsprechende Innengewindeeinsätze (424) geschraubt sind, die in der Mehrzahl von Innengewindeeinsätzen (424) beinhaltet sind, um die befestigbare Öse (304) auf der Sammelbandkarkasse (302) zu sichern.

9. Erntegutsammelband (17) nach einem der Ansprüche 1 bis 6, wobei das System zum sicheren Befestigen der Ösen eine Zunge (432) beinhaltet, die sich von jeder in der Mehrzahl von befestigbaren Ösen (304) beinhalteten befestigbaren Öse erstreckt, wobei die Sammelbandkarkasse (302) eine Mehrzahl von Nuten (434) beinhaltet, und wobei jede in der Mehrzahl von Nuten (434) beinhaltete Nut eine Zunge (432) aufnimmt, die sich von jeder befestigbaren Öse erstreckt, um die befestigbare Öse (304) auf der Sammelbandkarkasse (302) zu sichern.

10. Erntegutsammelband (17) nach einem der Ansprüche 1 bis 6, wobei das System zum sicheren Befestigen der Ösen eine Nut (442) beinhaltet, die in jeder in der Mehrzahl von befestigbaren Ösen (304) beinhalteten befestigbaren Öse ausgebildet ist, wobei die Sammelbandkarkasse (302) eine Mehrzahl von sich davon erstreckenden Zungen (444) beinhaltet, und wobei die Nut (442) eine in der Mehrzahl von Zungen (444) beinhaltete Zunge aufnimmt, um die befestigbare Öse auf der Sammelbandkarkasse (302) zu sichern.

## Revendications

1. Courroie de collecte de culture (17) comprenant une carcasse de courroie de collecte (302) ;
**caractérisée en ce que**,
la courroie de collecte de culture (17) comprend en outre une pluralité de pattes attachables (304) pour une liaison à la carcasse de courroie de collecte (302) sur un premier côté de la carcasse de courroie de collecte (302), et un système pour fixer solidement les pattes comprises dans la pluralité de pattes attachables (304), à la carcasse de courroie de collecte (302), la carcasse de courroie de collecte (302) comprenant en outre une pluralité de pattes d'entraînement (306) disposées sur un côté opposé au premier côté de la carcasse de courroie de collecte (302).

2. Courroie de collecte de culture (17) selon la revendication 1 qui est une courroie de collecte de maïs.

3. Courroie de collecte de culture (17) selon la revendication 1 ou 2, la carcasse de courroie de collecte (302) et la pluralité de pattes attachables (304) comprenant toutes deux des matériaux caoutchouteux semblables.

4. Courroie de collecte de culture (17) selon la revendication 1 ou 2, la carcasse de courroie de collecte (302) et la pluralité de pattes attachables (304) comprenant des matériaux caoutchouteux différents.

5. Courroie de collecte de culture (17) selon la revendication 1 ou 2, la carcasse de courroie de collecte (302) comprenant un matériau caoutchouteux et la pluralité de pattes attachables (304) comprenant un matériau polyuréthane.

6. Courroie de collecte de culture (17) selon la revendication 1 ou 2, au moins une des pattes étant formée à partir d'un matériau différent de celui des autres pattes comprises dans la pluralité de pattes attachables (304).

7. Courroie de collecte de culture (17) selon l'une quelconque des revendications 1 à 6, le système pour fixer solidement les pattes comprenant une pluralité de boulons filetés (412) s'étendant à partir de chaque patte attachable (304) et fixées à l'intérieur de celle-ci, chacun de la pluralité de boulons filetés (412) étant passé à travers la carcasse de courroie de collecte (302), et des écrous (414) étant filetés sur une extrémité distale de chacun des boulons filetés (412) pour fixer la patte attachable (304) sur la carcasse de courroie de collecte (302).

8. Courroie de collecte de culture (17) selon l'une quelconque des revendications 1 à 6, le système pour fixer solidement les pattes comprenant une pluralité d'inserts filetés femelles (424) contenus dans chaque patte attachable, une pluralité de boulons filetés (422) étant passée à travers la carcasse de courroie de collecte (302) à partir d'un premier côté, et la pluralité de boulons filetés (422) étant chacun vissés dans les inserts filetés femelles (424) correspondants compris dans la pluralité d'inserts filetés femelles (424), afin de fixer la patte attachable (304) sur la carcasse de courroie de collecte (302).

9. Courroie de collecte de culture (17) selon l'une quelconque des revendications 1 à 6, le système pour fixer solidement les pattes comprenant une languette (432) s'étendant à partir de chaque patte attachable comprise dans la pluralité de pattes attachables (304), la carcasse de courroie de collecte (302) comprenant une pluralité de rainures (434), et chaque rainure comprise dans la pluralité de rainures (434) recevant une languette (432) s'étendant à partir de chaque patte attachable pour fixer la patte attachable (304) sur la carcasse de courroie de collecte (302).

10. Courroie de collecte de culture (17) selon l'une quelconque des revendications 1 à 6, le système pour fixer solidement les pattes comprenant une rainure (442) formée à l'intérieur de chaque patte attachable comprise dans la pluralité de pattes attachables (304), la carcasse de courroie de collecte (302) comprenant une pluralité de languettes (444) s'étendant à partir de celle-ci, et la rainure (442) recevant une languette comprise dans la pluralité de languettes (444) pour fixer la patte attachable sur la carcasse de courroie de collecte (302).
